# EUROPÄISCHE PATENTSCHRIFT

(11) **EP 3 158 175 B1**
(45) Veröffentlichungstag und Bekanntmachung des Hinweises auf die Patenterteilung: **26.09.2018**
(21) Anmeldenummer: 15713134.3
(22) Anmeldetag: 26.03.2015
(51) Int. Cl.: F01N 3/28, F01N 11/00, F01N 1/02, F01N 1/08

(54) **MISCHVORRICHTUNG EINES ABGASREINIGUNGSSYSTEMS EINER KRAFTFAHRZEUG-BRENNKRAFTMASCHINE**
MIXING DEVICE OF AN EXHAUST GAS PURIFICATION SYSTEM OF A MOTOR-VEHICLE INTERNAL COMBUSTION ENGINE
DISPOSITIF MÉLANGEUR D'UN SYSTÈME D'ÉPURATION DES GAZ D'ÉCHAPPEMENT D'UN MOTEUR À COMBUSTION INTERNE DE VÉHICULE AUTOMOBILE

(30) Priorität: 17.06.2014 DE 102014009015
(43) Veröffentlichungstag der Anmeldung: 26.04.2017
(73) Patentinhaber: Daimler AG, 70327 Stuttgart (DE)
(72) Erfinder: PETRY, Andreas, 71563 Affalterbach (DE)
(74) Vertreter: JENSEN & SON
(86) Internationale Anmeldenummer: PCT/EP2015/000645
(87) Internationale Veröffentlichungsnummer: WO 2015/192926

(56) Entgegenhaltungen:
- EP-A1- 2 325 452
- EP-A2- 2 465 602
- DE-A1- 4 203 807
- US-A- 4 054 418

## Beschreibung

Die Erfindung betrifft eine Mischvorrichtung eines Abgasreinigungssystems einer Kraftfahrzeug-Brennkraftmaschine zur Vermischung von Harnstofflösung mit Abgas der Kraftfahrzeug-Brennkraftmaschine.

Zur Entfernung von Stickoxiden aus Abgas von insbesondere mager betriebenen Kraftfahrzeug-Brennkraftmaschinen durch selektive katalytische Reduktion an einem so genannten SCR-Katalysator ist es gebräuchlich, wässrige Harnstofflösung dem Abgas zuzugeben. Durch Thermolyse und/oder Hydrolyse wird im heißen Abgas aus dem Harnstoff Ammoniak freigesetzt, welcher als eigentliches Reduktionsmittel für die Stickoxide wirkt und an den katalytischen Zentren des SCR-Katalysators Stickoxide selektiv zu Stickstoff reduziert. Dabei besteht eine Schwierigkeit darin, die Harnstofflösung möglichst gleichmäßig im Abgas zu verteilen und dabei Ablagerungen zu vermeiden. Hierzu wurde bereits vorgeschlagen, dem Abgas vor der Zugabe der Harnstofflösung eine rotierende Strömung aufzuprägen. Beispielsweise ist aus der US 2013/0064725 A1 eine Mischvorrichtung eines Abgasreinigungssystems bekannt, bei welcher Abgas aus einem Abgasrohr einem senkrecht zu diesem ausgerichteten Mischrohr zugeführt wird, wobei das Abgas in seiner Hauptströmungsrichtung umgelenkt wird und ihm eine Rotationsströmung aufgeprägt wird. In die Rotationsströmung wird mittels einer endseitig am Mischrohr angeordneten Dosiervorrichtung Harnstofflösung eingesprüht. Eine weitere Mischvorrichtung ist aus EP2465602 bekannt.

Es ist Aufgabe der Erfindung, eine Mischvorrichtung zur Vermischung von Harnstofflösung mit Abgas anzugeben, bei welcher die Vermischung weiter verbessert ist und Ablagerungen noch wirksamer vermieden werden können.

Diese Aufgabe wird durch eine Mischvorrichtung mit den Merkmalen des Anspruchs 1 gelöst.

Die erfindungsgemäße Mischvorrichtung weist ein gerades kreiszylindrisches Drallrohr mit einem ersten Ende und einem dem ersten Ende gegenüberliegenden zweiten Ende und einer Mantelfläche mit einer Ausschnittsöffnung auf. In dem Drallrohr ist koaxial zu diesem ein kreiszylindrisches Mischrohr angeordnet, welches ein innerhalb des Drallrohrs angeordnetes offenes erstes Ende aufweist und ein Bodenteil des zweiten Drallrohrendes durchstößt. Ferner ist ein wenigstens annähernd tangential derart in das Drallrohr einmündendes Abgaszufuhrrohr vorgesehen, dass Abgas aus dem Abgaszufuhrrohr durch die Ausschnittsöffnung in der Mantelfläche des Drallrohrs wenigstens annähernd tangential in das Drallrohr eintreten kann und nach seinem Eintritt in das Drallrohr eine um das Mischrohr herum rotierende Strömung ausbildet, wobei es unter Beibehaltung einer rotierenden Strömung vollständig in das offene erste Ende des Mischrohrs eintritt und das Innere des Drallrohrs vollständig durch das Mischrohr verlässt. Mittels einer am ersten Ende des Drallrohrs angeordneten Dosiervorrichtung kann Harnstofflösung mit einem kegelförmigen Sprühbild so in das Drallrohr eingesprüht werden, dass sie wenigstens annähernd vollständig in das offene erste Ende des Mischrohrs eintritt und von der rotierenden Strömung des Abgases mitgerissen wird und zusammen mit dem Abgas durch das Mischrohr aus dem Inneren des Drallrohrs ausgetragen wird. Beibehaltung einer rotierenden Strömung bedeutet dabei nicht zwingend, dass ein ursprünglich vorhandener Drall in Bezug auf Stärke und Richtung der Strömungsgeschwindigkeit beibehalten wird, sondern dass eine beim Einströmen in das Drallrohr dem Abgas aufgeprägte, um das Mischrohr im Wesentlichen schraubenförmig herum verlaufende Rotationsströmung insoweit auch im Mischrohr fortgesetzt ist, als hier die Gasströmung einen mittleren Drehimpulsvektor aufweist, der auch eine in Achsrichtung ausgerichtete Komponente aufweist. Insgesamt sind infolge der erfindungsgemäßen Ausführung der Mischvorrichtung in dem Drallrohr Rezirkulationen von Abgas und Strömungstotzonen und damit Ablagerungen weitestgehend vermeidbar.

Zwischen dem offenen ersten Mischrohrende und dem ersten Drallrohrende entsteht ein gewisser Staudruck dadurch, dass das Abgas vollständig in das Mischrohr gezwungen wird, was die von der Dosiervorrichtung unter Druck abgesprühte Harnstofflösung zusätzlich beschleunigt. Da in das Drallrohr eintretendes Abgas das Mischrohr umströmt, wird dieses zusätzlich von Abgas aufgeheizt, was im Mischrohr eine Ausbildung von Kristallisationsablagerungen wirksam verhindert. Dabei gewährleistet der entsprechend spitzwinklig kegelförmig ausgebildete Sprühstrahl, dass Harnstofflösung wenigstens annähernd ausschließlich in das Mischrohr gelangt und somit praktisch nicht die Innenseite des typischerweise etwas kälteren Drallrohrs benetzten und dann dort Ablagerungen ausbilden kann. Bereits im Mischrohr kann eine Aufbereitung der Harnstofflösung nicht allein durch Vermischung mit Abgas erfolgen, sondern es erfolgt auch eine Verdampfung der wässrigen Bestandteile und ferner in mehr oder großem Umfang eine Zersetzung von Harnstoff unter Freisetzung von gasförmigem Ammoniak infolge von Thermolyse und/oder Hydrolyse. Insofern ist unter einem gemeinsamen Austrag von Harnstofflösung und Abgas aus dem Mischrohr zu verstehen, dass umgewandelte Bestandteile der Harnstofflösung zusammen mit dem Abgas aus dem Mischrohr ausgetragen werden. Aufgrund der sich praktisch im gesamten Drallrohr ausbildenden rotatorischen Abgasströmung erfolgt eine Vermischung von Harnstofflösung mit Abgas bereits unmittelbar nach deren Absprühen. Infolge der auch im Mischrohr vorhandenen Rotationsströmung des Abgases erfolgt eine weitergehende Vermischung und Aufbereitung und es ist eine gleichmäßige Verteilung der eingesprühten Harnstofflösung über den Mischrohrquerschnitt ermöglicht.

In Ausgestaltung der Erfindung weist das Mischrohr eine geschlossene Mantelfläche auf. Dies gewährleistet, dass Abgas ausschließlich in das der Dosiervorrichtung gegenüberliegende offene Ende eintreten kann und die infolge des wenigstens annähernd tangentialen Abgaseinlaufs in das Drallrohr verursachte rotierende Abgasströmung bis zum Eintritt in das Mischrohr und darüber hinaus erhalten bleibt.

In weiterer Ausgestaltung der Erfindung weist das Abgaszufuhrrohr an seiner Einmündung in das Drallrohr eine sich in Bezug auf das Drallrohr in axialer Richtung ausdehnende Querschnittsvergrößerung auf. Durch diese Maßnahme werden Strömungswiderstände für das Abgas speziell beim Übertritt vom Abgaszufuhrrohr in das Drallrohr und somit Druckverluste verringert. Stromauf der Querschnittsvergrößerung ist der Querschnitt des Abgaszufuhrrohrs vorzugsweise wenigstens abschnittsweise gleichbleibend und rund ausgebildet.

In weiterer Ausgestaltung der Erfindung erstreckt sich die Ausschnittsöffnung in ihrer bezüglich der Drallrohrachse längsten Ausdehnung von einem Bereich nahe des zweiten Endes des Drallrohrs bis in einen Bereich nahe des offenen ersten Ende des Mischrohrs.

Vorzugsweise reicht die Ausschnittsöffnung bis auf wenige Millimeter, d.h. bis auf weniger als 10 mm, insbesondere weniger als 5 mm an das zweite Drallrohrende heran. Auf der gegenüber liegenden Seite reicht die Ausschnittsöffnung in Bezug auf die Achse von Mischrohr bzw. Drallrohr vorzugsweise bis auf weniger als 30 mm, insbesondere weniger als 20 mm an das offenen erste Ende des Mischrohrs heran. Der im Inneren des Drallrohrs angeordnete Mischrohrabschnitt weist somit eine Länge auf, welche nur wenig größer als die in Achsrichtung gesehene längste Ausdehnung der Ausschnittsöffnung ist. Vorzugsweise beträgt die Länge des im Inneren des Drallrohrs angeordneten Mischrohrabschnitts etwa 125 % der in Achsrichtung gesehen längsten Ausdehnung der Ausschnittsöffnung. Der im Inneren des Drallrohrs angeordnete Mischrohrabschnitt weist vorzugsweise eine Länge auf, welche etwa 60 % - 70 % der Gesamtlänge des Drallrohrs ausmacht. Dadurch ergibt sich eine besonders kompakte Bauform.

In weiterer Ausgestaltung der Erfindung entspricht die Querschnittsfläche des Mischrohrs wenigstens annähernd der kleinsten Querschnittsfläche des Abgaszufuhrrohrs, wobei in weiterer Ausgestaltung der Erfindung die Differenz der Querschnittsfläche des Drallrohrs und der Querschnittsfläche des Mischrohrs um wenigstens 30 Prozent größer als die kleinste Querschnittsfläche des Abgaszufuhrrohrs ist. Infolge dieser Ausführung sind Verengungen des Abgasströmungswegs stromab der Einmündung des Abgaszufuhrrohrs in das Drallrohr vermieden. Dadurch, dass die Freifläche zwischen Mischrohr und Drallrohr größer als die Querschnittsfläche des Abgaszufuhrrohrs ausgebildet ist, ergibt sich beim Einströmen des Abgases in das Drallrohr zudem eine sprunghafte Vergrößerung des Strömungsquerschnitts, welcher wiederum eine akustische Dämpfung bewirkt. Daher ist das Strömungsgeräusch besonders niedrig.

Gemäß der Erfindung ist ein sich in Richtung des offenen ersten Mischrohrendes kegelförmig öffnendes Trichterelement mit einer wenigstens annähernd zur Drallrohrachse kollinearen Kegelachse und einer perforierten Kegelmantelfläche vorgesehen, in welches die Dosiervorrichtung die Harnstofflösung wenigstens annähernd vollständig einsprühen kann. Das Trichterelement nimmt den kegelförmigen Sprühstrahl der von der Dosiervorrichtung abgesprühten Harnstofflösung wenigstens annähernd vollständig auf. Dabei ermöglicht die Perforierung der Kegelmantelfläche einen etwa radial gerichteten Abgaszutritt ins Innere des Trichterelements. Ein Abgaszutritt in das Trichterelement ist jedoch auch in axialer Richtung durch eine kreiszylindrische Öffnung am spitzen Ende des Trichterelements ermöglicht, durch welche der Sprühstrahl in das Innere des Trichterelements gelangt. Dadurch kann abgesprühte Harnstofflösung in Absprührichtung bzw. in Achsrichtung vom Abgas in Richtung des offenen Mischrohrendes von der Abgasströmung erfasst und mitgenommen werden. Vorzugsweise ist durch konstruktive Auslegung dafür gesorgt, dass die Abgasströmungsgeschwindigkeit im Bereich des Trichterelements mehr als doppelt so groß ist als an der Eintrittsstelle in das Drallrohr. Vorzugsweise ist sie auch deutlich größer als die ursprüngliche Geschwindigkeit der abgesprühten Harnstofflösungströpfchen. Damit ist ein effektives Mitreißen der Tröpfchen und deren zerkleinernder Aufteilung zu einem feinen Spray ermöglicht. Das weitere offene Ende des Trichterelements reicht bis auf einige Millimeter, vorzugsweise etwa 20 mm an das offene Mischrohrende heran. Der Durchmesser der größeren Trichterelementöffnung beträgt vorzugsweise etwa die Hälfte des Mischrohrdurchmessers. Dadurch ist gewährleistet, dass abgesprühte Harnstofflösung wenigstens annähernd vollständig in das Mischrohr eingesprüht werden kann.

In weiterer Ausgestaltung der Erfindung ist ein das Trichterelement aufnehmendes Hüllrohr mit großflächig perforierter Mantelfläche vorgesehen. Das Hüllrohr kann kreiszylindrisch oder konisch, bzw. stumpfkeglig ausgeführt sein. Im Falle einer stumpfkegligen Ausführung ist vorzugsweise eine Kegelöffnung in Richtung des ersten Drallrohrendes vorgesehen. Durch das Hüllrohr ist eine mechanische Halterung des Trichterelements ermöglicht. Hierzu schließt das Hüllrohr an einem Ende etwa mit der größeren Öffnung des Trichterelements ab und ist randseitig kraftschlüssig und/oder formschlüssig mit diesem verbunden. Das andere Ende des Hüllrohrs ist vorzugsweise mit einem Bodenteil des ersten Drallrohrendes oder mit einer die Dosiervorrichtung tragenden Konsole randseitig kraftschlüssig und/oder formschlüssig verbunden. Mit dieser Ausführungsform ist eine hohe mechanische Stabilität gewährleistet. Die Lochfläche der Perforation des Hüllrohrs macht vorzugsweise wenigstens die Hälfte der gesamten Mantelhüllfläche aus. Dadurch ist eine Behinderung der Abgasströmung weitestgehend vermieden.

In weiterer Ausgestaltung der Erfindung ist ein Strömungsleitblech mit sich wenigstens annähernd V-förmig in Richtung des zweiten Drallrohrendes öffnenden Schenkeln vorgesehen, wobei die Schenkel entlang ihrer einen V-förmigen Profillinie formschlüssig mit der Mantelfläche des Mischrohrs verbunden sind und entlang ihrer gegenüberliegenden anderen V-förmigen Profillinie wenigstens annähernd Berührkontakt mit der Mantelfläche des Drallrohrs aufweisen und eine Verbindungslinie der Schenkel wenigstens annähernd in einer zur Längsrichtung des Abgaszufuhrrohrs parallelen Richtung orientiert ist. In Längsrichtung des Strömungsleitblechs erstreckt sich dieses etwa von der in Höhe der Mittelachse des Abgaszufuhrrohrs angeordneten Verbindungslinie der Schenkel bis wenigstens annähernd zum Boden des zweiten Drallrohrendes. Dabei ist bevorzugt der dem Abgaszufuhrrohr näher zugewandte Schenkel wenigstens annähernd in Achsrichtung des Mischrohrs bzw. Drallrohrs ausgerichtet. Der Öffnungswinkel der Schenkel beträgt vorzugsweise etwa 45 Grad. Das Strömungsleitblech bewirkt eine Lenkung der Strömung von in das Drallrohr eingetretenem Abgas in Richtung des offenen Mischrohrendes unter Ausbildung einer spiralförmig um das Mischrohr herum rotierenden Strömung. Insbesondere gilt dies für Strömungsfäden von Abgas, welche nahe des zweiten Drallrohrendes nahezu vollständig um das Mischrohr herum gelaufen sind.

Vorteilhafte Ausführungsformen der Erfindung sind in den Zeichnungen veranschaulicht und werden nachfolgend beschrieben, wobei sich entsprechende Bauteile in den Figuren durch die gleichen Bezugszeichen gekennzeichnet sind. Die vorstehend genannten und die nachfolgend noch zu erläuternden Merkmale sind dabei nicht nur in der jeweils angegebenen Merkmalskombination, sondern auch in anderen Kombinationen oder in Alleinstellung verwendbar ohne den Rahmen der vorliegenden Erfindung zu verlassen.

Es zeigen:
- Fig. 1: eine erste Darstellung einer ersten bevorzugten Ausführungsform der erfindungsgemäßen Mischvorrichtung,
- Fig. 2: eine zweite Darstellung der in Fig. 1 gezeigten Ausführungsform,
- Fig. 3: eine Explosionsdarstellung der erfindungsgemäßen Mischvorrichtung nach Fig. 1 und Fig. 2,
- Fig. 4: eine erste Darstellung einer zweiten bevorzugten Ausführungsform der erfindungsgemäßen Mischvorrichtung,
- Fig. 5: eine Explosionsdarstellung der erfindungsgemäßen Mischvorrichtung nach Fig. 4 und
- Fig. 6: eine schematische Schnittdarstellung eines endseitigen Bereichs der erfindungsgemäßen Mischvorrichtung.

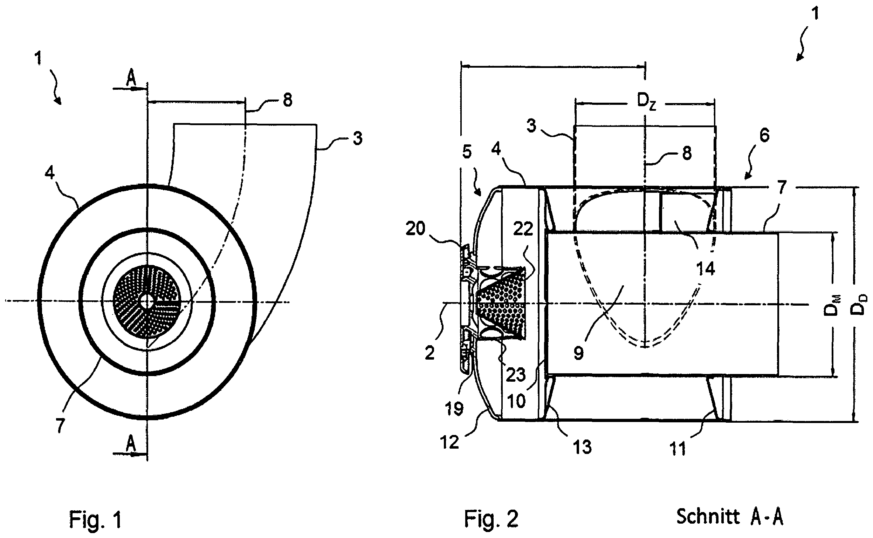

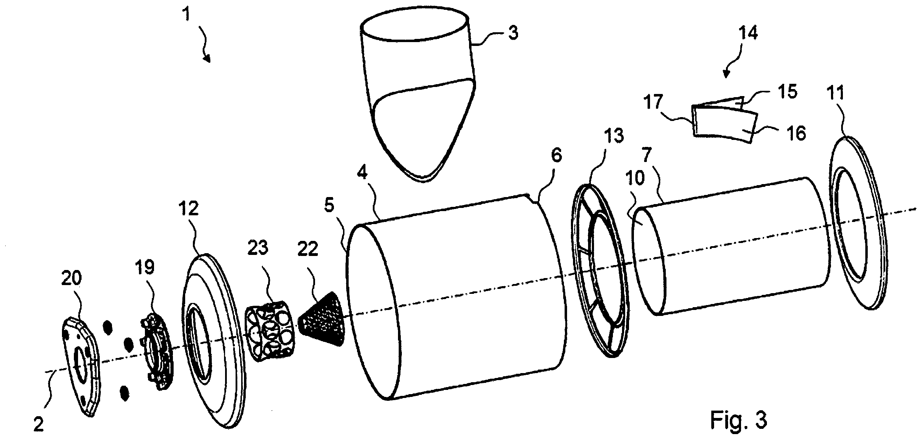

Zur Erläuterung einer ersten bevorzugten Ausführungsform der erfindungsgemäßen Mischvorrichtung wird zunächst Bezug auf die Figuren 1 bis 3 genommen. Dabei zeigt Fig. 1 zeigt die Mischvorrichtung 1 in einer Draufsicht in Richtung einer ersten Achse 2. In Fig. 2 ist eine senkrecht hierzu gesehene Schnittdarstellung entlang der Schnittlinie A - A gezeigt. Fig. 3 zeigt die Mischvorrichtung 1 in einer Explosionsdarstellung. Die Darstellungen sind wenigstens annähernd maßstabsgetreu.

Die Mischvorrichtung 1 weist ein Abgaszufuhrrohr 3, ein Drallrohr 4 mit einem ersten Ende 5 und einem gegenüberliegenden zweiten Ende 6 sowie ein Mischrohr 7 auf. Die Rohre 3, 4, 7 sind vorliegend kreiszylindrisch ausgeführt. Insbesondere das Abgaszufuhrrohr 3 kann jedoch auch eine andere Querschnittsform, beispielsweise annähernd rechteckig mit abgerundeten Ecken, aufweisen. Abgaszufuhrrohr 3 und Drallrohr 4 sind dabei so zueinander angeordnet, dass eine Mittelachse 8 des Abgaszufuhrrohrs 3 in einer Querschnittsebene des Drallrohres 4 liegt. Das Abgaszufuhrrohr 3 mündet in das Drallrohr 4 wenigstens annähernd tangential ein, wozu das Drallrohr 4 auf seiner ansonsten geschlossenen Mantelfläche eine Ausschnittsöffnung 9 aufweist, deren Randkontur mit der Randkontur des Abgaszufuhrrohrendes ringsum bündig und materialschlüssig verbunden ist. Die annähernd tangentiale Einmündung des Abgaszufuhrrohrs 3 in das Drallrohr 4 ergibt sich dadurch, dass die Mittelachse 8 des Abgaszufuhrrohrs 3 einerseits auf einen Bereich außerhalb der Querschnittsmitte des Drallrohrs 4 gerichtet ist und andererseits, wie dargestellt, im Endbereich des Abgaszufuhrrohrs 3 vorzugsweise annähernd parallel zur Außenkontur des Drallrohrs 3 verläuft.

Das Mischrohr 7 weist ebenfalls eine geschlossene Mantelfläche auf und ist koaxial zu dem mit größerem Durchmesser ausgeführten Drallrohr 4 so angeordnet, dass ein über den gesamten Querschnitt offenes erstes Ende 10 des Mischrohrs 7 innerhalb des Drallrohrs 4 und näher an dessen erstem Ende 5 als an dessen zweitem Ende 6 liegt. Das Mischrohr 7 durchstößt das mit einem ringförmigen zweiten Bodenteil 11 abgeschlossene zweite Ende 6 des Drallrohrs 4. Das zweite Bodenteil 11 ist einerseits außenumfangsseitig gasdicht mit dem Drallrohr 4 an dessen zweitem Ende 6 und andererseits innenumfangsseitig gasdicht mit dem Mantel des Mischrohrs 7 verbunden. Somit kann am zweiten Drallrohrende 6 Abgas lediglich über das Mischrohr 7 den Innenbereich des Drallrohrs 4 verlassen. Ein erstes Bodenteil 12 schließt das erste Ende 5 des Drallrohrs 4 ab. An diesem ersten Bodenteil 12 ist eine in den Figuren 1 bis 3 nicht dargestellte Dosiervorrichtung angeordnet, welche Harnstofflösung oder eine andere, Ammoniak in freier oder gebundener Form enthaltende Flüssigkeit etwa in Richtung der Achse 2 in das Drallrohr 4 bzw. in das Mischrohr 7 absprühen kann, worauf weiter unten näher eingegangen wird. Das Mischrohr 7 ist mechanisch lagestabilisiert in Bezug auf das Drallrohr 4 einerseits an dessen zweitem Ende 6 durch umfangsseitige Verbindung mit dem zweiten Bodenteil 11 und andererseits durch ein ringförmig ausgebildetes Halteelement 13 mit radial verlaufenden Speichen. Dabei ist das Halteelement 13 wie dargestellt vorzugsweise am offenen ersten Ende 10 des Mischrohrs 7 angeordnet und stützt dieses allseitig radial gegen das Drallrohr 4 ab.

Infolge dieser Ausführungsform der Mischvorrichtung 1 wird über das Abgaszufuhrrohr 3 in das Drallrohr 4 einströmendem Abgas eine schraubenförmig um das Mischrohr 7 herum verlaufende Rotation aufgeprägt. Diese weist im Zylinderringbereich zwischen Drallrohr 4 und Mischrohr 7 eine Richtungskomponente auf, welche vom zweiten Ende 6 des Drallrohrs 4 zu dessen erstem Ende 5 gerichtet ist. Das in das Drallrohr 4 eingeströmte Abgas wird durch das offene erste Ende 10 des Mischrohrs 7 vollständig in dieses gezwungen, wobei es weiterhin eine Rotationsbewegung ausführt. Da ein Ausströmen aus dem Innenbereich des Drallrohrs 4 ausschließlich über das Mischrohr 7 möglich ist, weist die Abgasströmung im Inneren des Mischrohrs 7 zwangsläufig auch eine Komponente in Richtung der Achse 2 auf, welche jedoch im Vergleich zur Abgasströmung im Zylinderringbereich zwischen Drallrohr 4 und Mischrohr 7 entgegengesetzt gerichtet ist.

Zur Unterstützung der Drehimpulserzeugung für in das Drallrohr 4 einströmendes Abgas und zur Vermeidung einer Rückströmung ist vorliegend ein Strömungsleitblech 14 vorgesehen. Das Strömungsleitblech 14 ist vorzugsweise im Bereich des zweiten Endes 6 des Drallrohrs 4 auf der Oberseite des Mischrohrs 7 angeordnet, d.h. auf dessen Außenseite aufsitzend und wenigstens annähernd weitestmöglich parallel zur Mittelachse 8 des Abgaszufuhrrohr 3 entgegengesetzt zur Abgaseinströmungsrichtung orientiert. Das Strömungsleitbleich 14 weist vorliegend zwei sich spitzwinklig und etwa V-förmig in Richtung des zweiten Drallrohrendes 6 öffnende Schenkel 15, 16 auf, welche entlang einer parallel zur Richtung der Mittelachse 8 des Abgaszufuhrrohrs 3 orientierten Verbindungslinie 17 miteinander verbunden sind. Der dem Abgaszufuhrrohr 3 näher liegende Schenkel 15 ist dabei bevorzugt wenigstens annähernd in Richtung der ersten Achse 2 ausgerichtet. Vorzugsweise sind die beiden Schenkel 15, 16 entlang ihrer oberen Profillinie mit der Innenseite des Drallrohrzylindermantels und entlang ihrer unteren Profillinie mit der Außenseite des Mischrohrzylindermantels formschlüssig verbunden. Die der Verbindungslinie 17 gegenüberliegenden Schenkelenden liegen vorzugsweise am zweiten Bodenteil 11 an oder sind mit diesem form- und/oder materialschlüssig verbunden. Zumindest reichen die beiden Schenkel 15, 16 bis auf eine sehr geringe Entfernung an das zweite Bodenteil 11 heran.

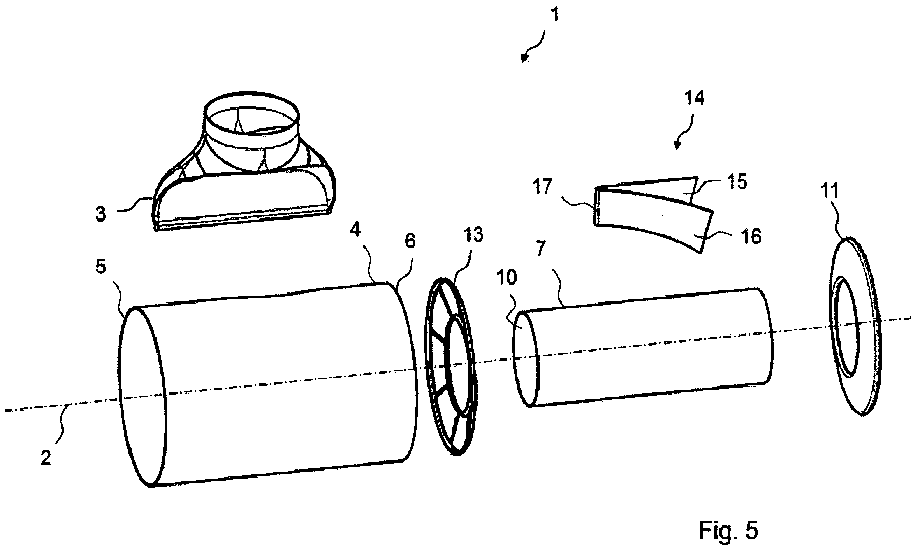

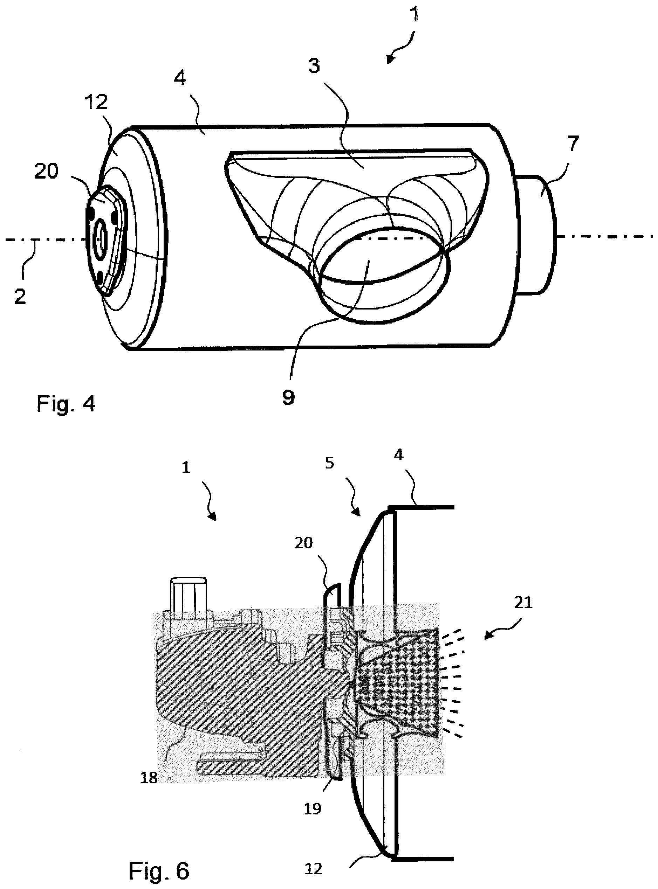

Nachfolgend wird unter Bezug auf die Figuren 4 und 5 eine zweite vorteilhafte Ausführungsform der erfindungsgemäßen Mischvorrichtung 1 erläutert, wobei im Wesentlichen auf die im Vergleich zur oben erläuterten ersten Ausführungsform vorhandenen Unterschiede eingegangen wird. Dabei zeigt Fig. 4 schematisch eine perspektivische Ansicht und Fig. 5 eine Explosionsansicht ähnlich Fig. 3.

Wie ersichtlich, zeichnet sich die zweite vorteilhafte Ausführungsform der Mischvorrichtung 1 durch eine Querschnittserweiterung des Abgaszufuhrrohrs 3 unmittelbar vor der Einmündung in das Drallrohr 4 aus. Die Erweiterung des Querschnitts wird dabei vorliegend durch eine spiegelsymmetrische Verbreiterung des stromauf der Querschnittserweiterung rund ausgeführten Abgaszufuhrrohrs 3 in Richtung der Mittelachse 2 erzielt. Das Drallrohr 4 kann hierfür im Vergleich zu der in den Figuren 1 bis 3 beschriebenen ersten Ausführungsform verlängert ausgeführt sein. Infolge der Querschnittserweiterung an der Überströmstelle vom Abgaszufuhrrohr 3 zum Drallrohr 4 sind Druckverluste speziell bei der Einströmung des Abgases in das Drallrohr 4 vermindert. Weiterhin ist die Stabilität und Gleichmäßigkeit der Rotationsströmung verbessert.

Nachfolgend wird unter zusätzlichem Bezug auf Fig. 6 näher auf das Einbringen der Harnstofflösung in das Drallrohr 4 eingegangen. Dabei zeigt Fig. 6 einen endseitigen Bereich der Mischvorrichtung 1 mit montierter Dosiervorrichtung für Harnstofflösung in einer schematischen Schnittdarstellung.

Die in Fig. 6 mit dem Bezugszeichen 18 gekennzeichnete Dosiervorrichtung ist über einen vorzugsweise als Feingussbauteil ausgebildeten Flansch 19 mit dem Drallrohr 4 bzw. mit dessen erstem Bodenteil 12 unter Zwischenschaltung einer als Kühlblech 20 ausgebildeten Konsole verbunden bzw. verschraubt. Hierzu ist der mit entsprechenden Schraublöchern versehene runde Flansch 19 ringsum formschlüssig bzw. materialschlüssig mit einer Randkontur einer im ersten Bodenteil 12 vorgesehenen und zentrisch angeordneten Öffnung verbunden. Die Anordnung ist vorzugsweise so ausgeführt, dass eine Düsenspitze der Dosiervorrichtung 18 mit ihrer Düsenöffnung im Bereich der Öffnung des ersten Bodenteils 12 wenigstens annähernd auf der Mittelachse 2 des Drallrohrs 4 bzw. des Mischrohrs 7 angeordnet ist. Die Dosiervorrichtung 18 kann Harnstofflösung mit einem sich in Richtung des offenen ersten Endes 10 des Mischrohrs 7 öffnenden kegelförmigen Sprühstrahl 21 so absprühen, dass abgesprühte Harnstofflösung wenigstens annähernd vollständig in das offene erste Ende 10 des Mischrohrs 7 eintritt, wo es von der rotierenden Abgasströmung erfasst und durch das Mischrohr 7 aus dem Innenbereich des Drallrohrs 4 ausgetragen und weiter in Richtung eines nicht dargestellten SCR-Katalysators transportiert wird. Dabei erfolgen einerseits noch im Mischrohr 7 eine gleichmäßige Verteilung der abgesprühten Harnstofflösung und andererseits eine Verdampfung und eine Freisetzung von Ammoniak.

Zur weiteren Verbesserung der Sprühstrahlformung und der Verteilung von abgesprühter Harnstofflösung und ferner für eine Zentrierung der Abgas-Rotationsströmung bezüglich der Mittelachse 2 ist ein sich in Richtung des offenen ersten Endes 10 des Mischrohrs 7 öffnendes und an den Enden jeweils offenes Trichterelement 22 vorgesehen, in welches der Sprühstrahl 21 hineingesprüht wird. Dabei ist das offene weite Ende des Trichterelements 22 mit etwa 20 mm Abstand zum offenen ersten Ende 10 des Mischrohrs angeordnet. Das gegenüberliegende Ende des Trichterelements 22 ist in unmittelbarer Nähe der Düsenspitze der Dosiervorrichtung 18 angeordnet. Das Trichterelement 22 weist eine kleinperforierte Kegelmantelfläche mit einer Vielzahl von Löchern auf, durch welche Abgas ins Innere des Trichterelements 22 annähernd radial eintreten kann. Dadurch wird abgesprühte Harnstofflösung in Richtung des Mischrohrs 7 beschleunigt. Eine zusätzliche Beschleunigung abgesprühter Harnstofflösung ist durch einen Abgaseintritt in die am spitzen Ende des Trichterelements 22 angeordnete Öffnung ermöglicht. Der Öffnungswinkel des Trichterelements 22 entspricht wenigstens annähernd dem Öffnungswinkel des Sprühstrahls 21, so dass der Sprühstrahl 21 vom Mantel des Trichterelements 22 umschlossen wird. Das Trichterelement 22 wird von einem vorliegend kreiszylindrisch ausgeführten Hüllrohr 23 gehalten, welches mit einem Ende mit dem weiten Ende des Trichterelements 22 bündig abschließt und dort umfangsseitig mit dem Trichterelement 22 formschlüssig bzw. materialschlüssig verbunden ist. An seinem anderen Ende ist das Hüllrohr 23 mit dem Flansch 19 verbunden. Das Hüllrohr 23 ist großflächig perforiert ausgeführt, um einen weitestgehend ungehinderten Abgaseintritt zu gewährleisten.

Sehr vorteilhafte Strömungsverhältnisse sind bei der Mischvorrichtung 1 mit folgenden Abmessungen erzielbar. Einerseits wird der Durchmesser D_{M} des Mischrohrs 7 vorzugsweise wenigstens annähernd gleich dem Durchmesser D_{Z} des Abgaszufuhrrohrs 3 vor einer gegebenenfalls vorgesehenen Querschnittserweiterung gewählt. Für über das Mischrohr 7 aus dem Drallrohr 4 ausströmendes Abgas ergibt sich somit wenigstens etwa der gleiche Strömungswiderstand wie für über das Abgaszufuhrrohr 3 in das Drallrohr 4 einströmendes Abgas. Andererseits wird der Durchmesser D_{D} des Drallrohrs 4 wenigstens um 50 % größer als der Durchmesser D_{Z} des Abgaszufuhrrohrs 3 vor einer gegebenenfalls vorgesehenen Querschnittserweiterung gewählt. Infolge dieser Dimensionierung ergibt sich ein Sprung des freien Strömungsquerschnitts für in das Drallrohr 4 einströmendes Abgas. Dies wirkt sich positiv auf die Akustik der Mischvorrichtung 1 aus, d.h. die Strömungsgeräusche des Abgases sind vermindert. Ferner ist vorgesehen, dass sich die Ausschnittsöffnung 9 im Mantel des Drallrohrs 4 in Bezug auf ihre längste Ausdehnung in Richtung der Achse 2 von einem Bereich nahe dem zweiten Ende 6 des Drallrohrs 4 bis in einen Bereich nahe des offenen Endes 10 des Mischrohrs 7 erstreckt. Daraus resultiert eine kompakte und kurz bauende Ausführung der Mischvorrichtung 1. Maßgeblich infolge des Einsprühens von Harnstofflösung in eine rotatorische Abgasströmung in das von Abgas umspülte Mischrohr 7 ist dennoch eine hervorragende Aufbereitung der eingesprühten Harnstofflösung ermöglicht.

### Bezugszeichenliste

- 1: Mischvorrichtung
- 2: Achse
- 3: Abgaszufuhrrohr
- 4: Drallrohr
- 5: Erstes Drallrohrende
- 6: Zweites Drallrohrende
- 7: Mischrohr
- 8: Mittelachse Abgaszufuhrrohr
- 9: Ausschnittsöffnung
- 10: Erstes Mischrohrende
- 11: Zweites Bodenteil
- 12: Erstes Bodenteil
- 13: Halteelement
- 14: Strömungsleitblech
- 15: Schenkel Halteelement
- 16: Schenkel Halteelement
- 17: Verbindungslinie
- 18: Dosiervorrichtung
- 19: Flansch
- 20: Kühlblech
- 21: Sprühstrahl
- 22: Trichterelement
- 23: Hüllrohr
- D_{M}: Durchmesser Mischrohr
- D_{Z}: Durchmesser Abgaszufuhrrohr
- D_{D}: Durchmesser Drallrohr

## Patentansprüche

1. Mischvorrichtung (1) eines Abgasreinigungssystems einer Kraftfahrzeug-Brennkraftmaschine zur Vermischung von Harnstofflösung mit Abgas der Brennkraftmaschine, umfassend
- ein gerades kreiszylindrisches Drallrohr (4) mit einem ersten Ende (5) und einem dem ersten Ende (5) gegenüberliegenden zweiten Ende (6) und einer eine Ausschnittsöffnung (9) aufweisende Mantelfläche,
- ein abschnittsweise in dem Drallrohr (4) und koaxial zu diesem angeordnetes kreiszylindrisches Mischrohr (7), welches ein innerhalb des Drallrohrs (4) angeordnetes offenes erstes Ende (10) aufweist und ein Bodenteil (11) des zweiten Drallrohrendes (6) durchstößt,
- ein wenigstens annähernd tangential derart in das Drallrohr (4) einmündendes Abgaszufuhrrohr (3), dass Abgas aus dem Abgaszufuhrrohr (3) durch die Ausschnittsöffnung (9) in der Mantelfläche des Drallrohrs (4) wenigstens annähernd tangential in das Drallrohr (4) eintreten kann und nach seinem Eintritt in das Drallrohr (4) eine um das Mischrohr (7) herum rotierende Strömung ausbildet, wobei es unter Beibehaltung einer rotierenden Strömung vollständig in das offene erste Ende (10) des Mischrohrs (7) eintritt und das Innere des Drallrohrs (4) vollständig durch das Mischrohr (7) verlässt,
- einer am ersten Ende (5) des Drallrohrs (4) angeordneten Dosiervorrichtung (18), welche Harnstofflösung mit einem kegelförmigen Sprühbild in das Drallrohr (4) einsprühen kann, so dass sie wenigstens annähernd vollständig in das offene erste Ende (10) des Mischrohrs (7) eintritt und von der rotierenden Strömung des Abgases mitgerissen wird und zusammen mit dem Abgas durch das Mischrohr (7) aus dem Inneren des Drallrohrs (4) ausgetragen wird und
- ein sich in Richtung des offenen ersten Mischrohrendes (10) kegelförmig öffnendes Trichterelement (22) mit einer wenigstens annähernd zur Drallrohrachse (2) kollinearen Kegelachse, in welches die Dosiervorrichtung (18) die Harnstofflösung wenigstens annähernd vollständig einsprühen kann und
- der Durchmesser der größeren Trichterelementöffnung etwa die Hälfte des Mischrohrdurchmessers beträgt.

2. Mischvorrichtung nach Anspruch 1,
**dadurch gekennzeichnet, dass**
die Kegelmantelfläche des sich kegelförmig öffnenden Trichterelements (22) perforiert ist.

3. Mischvorrichtung nach Anspruch 1,
**dadurch gekennzeichnet, dass**
das Trichterelement eine kreiszylindrische Öffnung am spitzen Ende des Trichterelements (22) aufweist.

4. Mischvorrichtung nach einem der vorangehenden Ansprüche,
**dadurch gekennzeichnet,**
**dass** das Mischrohr (7) eine geschlossene Mantelfläche aufweist.

5. Mischvorrichtung nach einem der vorangehenden Ansprüche,
**dadurch gekennzeichnet,**
**dass** das Abgaszufuhrrohr (3) an seiner Einmündung in das Drallrohr (4) eine sich in Bezug auf das Drallrohr (4) in axialer Richtung ausdehnende Querschnittsvergrößerung aufweist.

6. Mischvorrichtung nach einem der vorangehenden Ansprüche,
**dadurch gekennzeichnet,**
**dass** die Ausschnittsöffnung (9) sich in ihrer bezüglich der Drallrohrachse (2) längsten Ausdehnung von einem Bereich nahe des zweiten Endes (6) des Drallrohrs (4) bis in einen Bereich nahe des offenen ersten Ende (10) des Mischrohrs (7) erstreckt.

7. Mischvorrichtung nach einem der vorangehenden Ansprüche, **dadurch gekennzeichnet,**
**dass** die Querschnittsfläche des Mischrohrs (7) wenigstens annähernd einer kleinsten Querschnittsfläche des Abgaszufuhrrohrs (3) entspricht.

8. Mischvorrichtung nach einem der vorangehenden Ansprüche,
**dadurch gekennzeichnet,**
**dass** die Differenz der Querschnittsfläche des Drallrohrs (4) und der Querschnittsfläche des Mischrohrs (7) um wenigstens 30 Prozent größer als eine kleinste Querschnittsfläche des Abgaszufuhrrohrs (3) ist.

9. Mischvorrichtung nach Anspruch 8,
**dadurch gekennzeichnet,**
**dass** ein das Trichterelement (22) aufnehmendes Hüllrohr (23) mit einer perforierten Mantelfläche vorgesehen ist.

10. Mischvorrichtung nach einem der Ansprüche 1 bis 9,
**dadurch gekennzeichnet,**
**dass** ein Strömungsleitblech (14) mit sich wenigstens annähernd V-förmig in Richtung des zweiten Drallrohrendes (6) öffnenden Schenkeln (15, 16) vorgesehen ist, wobei die Schenkel (15, 16) entlang ihrer einen V-förmigen Profillinie formschlüssig mit der Mantelfläche des Mischrohrs (7) verbunden sind und entlang ihrer gegenüberliegenden anderen V-förmigen Profillinie wenigstens annähernd Berührkontakt mit der Mantelfläche des Drallrohrs (4) aufweisen und eine Verbindungslinie (17) der Schenkel (15, 16) wenigstens annähernd in einer zur Längsrichtung des Abgaszufuhrrohrs (3) parallelen Richtung orientiert ist.

## Claims

1. Mixing device (1) of an exhaust gas purification system of a motor vehicle internal combustion engine for mixing urea solution with exhaust gas of the internal combustion engine, the device (1) comprising
- a straight, circular cylindrical swirl tube (4) with a first end (5) and a second end (6) opposite the first end (5) and with a circumferential surface having a cut-out opening (9),
- a circular cylindrical mixing tube (7), a section of which is located in the swirl tube (4) and which is coaxial therewith, and which has an open first end (10) located within the swirl tube (4) and penetrates a base part (11) of the second swirl tube end (6),
- an exhaust gas feed tube (3), which terminates into the swirl tube (4) at least approximately tangentially in such a way that exhaust gas can enter the swirl tube (4) at least approximately tangentially from the exhaust gas feed tube (3) via the cut-out opening (9) in the circumferential surface of the swirl tube (4) and, following its entry into the swirl tube (4), forms a flow which rotates about the mixing tube (7), wherein it completely enters into the open first end (10) of the mixing tube (7) while maintaining a rotating flow and completely leaves the interior of the swirl tube (4) through the mixing tube (7),
- a metering device (18) located at the first end (5) of the swirl tube (4) and capable of spraying urea solution into the swirl tube (4) with a conical spray pattern, so that it enters into the open first end (10) of the mixing tube (7) at least substantially completely and is entrained by the rotating flow of the exhaust gas and, together with the exhaust gas, is discharged from the interior of the swirl tube (4) through the mixing tube (7), and
- a funnel element (22), which conically opens in the direction of the open first mixing tube end (10) and has a cone axis which is at least approximately collinear with the swirl tube axis (2) and into which the metering device (18) can spray the urea solution at least approximately completely,
- the diameter of the larger funnel element opening being approximately half the mixing tube diameter.

2. Mixing device according to claim 1,
**characterised in that**
the circumferential surface of the conically opening funnel element (22) is perforated.

3. Mixing device according to claim 1,
**characterised in that**
the funnel element has a circular cylindrical opening at the pointed end of the funnel element (22).

4. Mixing device according to any of the preceding claims,
**characterised in that**
the mixing tube (7) has a closed circumferential surface.

5. Mixing device according to any of the preceding claims,
**characterised in that**
the exhaust gas feed tube (3) has at its termination into the swirl tube (4) a cross-sectional enlargement in the axial direction relative to the swirl tube (4).

6. Mixing device according to any of the preceding claims,
**characterised in that**
the cut-out opening (9) extends in its longest dimension relative to the swirl tube (4) from a region close to the second end (6) of the swirl tube (4) to a region close to the open first end (10) of the mixing tube (7).

7. Mixing device according to any of the preceding claims,
**characterised in that**
the cross-sectional area of the mixing tube (7) at least approximately corresponds to a smallest cross-sectional area of the exhaust gas feed tube (3).

8. Mixing device according to any of the preceding claims,
**characterised in that**
the difference between the cross-sectional area of the swirl tube (4) and the cross-sectional area of the mixing tube (7) is greater by at least 30 percent than a smallest cross-sectional area of the exhaust gas feed tube (3).

9. Mixing device according to claim 8,
**characterised in that**
a casing (23) accommodating the funnel element (22) is provided with a perforated circumferential surface.

10. Mixing device according to any of claims 1 to 9,
**characterised in that**
a flow baffle (14) with legs (15, 16) opening in an at least approximately V-shaped formation in the direction of the second swirl tube end (6) is provided, wherein the legs (15, 16) are positively joined to the circumferential surface of the mixing tube (7) along their one V-shaped profile line and are at least approximately in touch contact with the circumferential surface of the swirl tube (4) along their opposite other V-shaped profile line, and **in that** a connecting line (17) of the legs (15, 16) is at least approximately oriented in a direction which is parallel to the longitudinal direction of the exhaust gas feed tube (3).

## Revendications

1. Dispositif de mélange (1) d'un système de dépollution d'un moteur à combustion interne d'un véhicule automobile destiné à mélanger une solution d'urée aux gaz d'échappement du moteur à combustion interne, comprenant :
- un tube spiralé (4) cylindrique circulaire droit ayant une première extrémité (5) et une seconde extrémité (6) en regard de la première extrémité (5) et une surface présentant un orifice (9),
- un tube de mélange (7) cylindrique circulaire à certains endroits dans le tube spiralé (4) et disposé coaxialement par rapport à celui, qui présente une première extrémité (10) ouverte disposée à l'intérieur du tube spiralé (4) et qui transperce une partie (11) de fond de la seconde extrémité (6) de tube spiralé,
- un tube (3) d'amenée de gaz d'échappement débouchant dans le tube spiralé au moins approximativement tangentiellement de sorte que le gaz d'échappement provenant du tube d'amenée de gaz d'échappement (3) puisse passer à travers l'orifice (9) de la surface du tube spiralé (4) au moins approximativement tangentiellement dans le tube spiralé (4) et après son introduction dans le tube spiralé (4) forme un écoulement tournant tout autour du tube de mélange (7), en maintenant un écoulement tournant, il pénètre complètement dans la première extrémité ouverte (10) du tube de mélange (7) et quitte l'intérieur du tube spiralé (4) complètement par le tube de mélange (7),
- un dispositif de dosage disposé au niveau de la première extrémité (5) du tube spiralé (4), qui peut injecter la solution d'urée à l'aide d'un jet de pulvérisation conique dans le tube spiralé (4) de manière à ce qu'elle puisse au mois approximativement complètement pénétrer dans la première extrémité ouverte (10) du tube de mélange (7) et être entraînée par l'écoulement tournant du gaz d'échappement et être évacuée de l'intérieur du tube spiralé (4), conjointement avec le gaz d'échappement, par le tube de mélange (7) et
- un élément de trémie (22) conique s'ouvrant dans la direction de la première extrémité (10) ouverte de tube de mélange ayant au moins un axe de cône approximativement colinéaire par rapport à l'axe (2) du tube spiralé, dans lequel le dispositif de dosage (18) peut pulvériser au moins approximativement complètement la solution d'urée et
- le diamètre de la plus grande ouverture d'élément de trémie s'élevant à environ la moitié du diamètre du tube de mélange.

2. Dispositif de mélange selon la revendication 1, **caractérisé en ce que** la surface du cône de l'élément (22) de trémie s'ouvrant coniquement est perforée.

3. Dispositif de mélange selon la revendication 1, **caractérisé en ce que** l'élément de trémie présente une ouverture circulaire cylindrique à la pointe de l'extrémité de l'élément (22) de trémie.

4. Dispositif de mélange selon l'une quelconque des revendications précédentes, **caractérisé en ce que** le tube de mélange (7) présente une surface fermée.

5. Dispositif de mélange selon l'une quelconque des revendications précédentes, **caractérisé en ce que** le tube d'amenée de gaz d'échappement (3) sur son embouchure dans le tube spiralé (4) présente un agrandissement transversale s'élargissant par rapport au tube spiralé (4) dans la direction axiale.

6. Dispositif de mélange selon l'une quelconque des revendications précédentes, **caractérisé en ce que** l'orifice (9) s'étend dans sa plus longue surface par rapport à l'axe (2) de tube spiralé à partir d'une zone à proximité de la seconde extrémité (6) du tube spiralé jusqu'à dans une zone à proximité de la première extrémité ouverte (10) du tube de mélange (7).

7. Dispositif de mélange selon l'une quelconque des revendications **caractérisé en ce que** la surface transversale du tube de mélange (7) correspond au moins approximativement à une plus petite surface transversale du tube d'amenée de gaz d'échappement (3).

8. Dispositif de mélange selon l'une quelconque des revendications précédentes, **caractérisé en ce que** la différence de la surface transversale du tube spiralé (4) et la surface transversale du tube de mélange (7) est au moins de 30 pourcents plus grand qu'une plus petite surface transversale du tube d'amenée de gaz d'échappement (3).

9. Dispositif de mélange selon la revendication 8, **caractérisé en ce qu'**un tube d'enveloppe (23) logeant l'élément de trémie (22) est doté d'une surface perforée.

10. Dispositif de mélange selon l'une quelconque revendications précédentes 1 à 9, **caractérisé en ce qu'**une plaque de dérivation d'écoulement (14) est dotée d'épaulements (15, 16) s'ouvrant au moins approximativement en forme de V dans la direction de la seconde extrémité de tube spiralé (6), les épaulements (15, 16) étant reliées le long de leur ligne de profil en forme de V par complémentarité de forme à la surface du tube de mélange (7) et présentant le long d'une autre ligne de profil en forme V opposée au moins approximativement un contact avec la surface du tube spiralé (4) et une ligne de liaison (17) de l'épaulement (15, 16) est orientée au moins approximativement dans une direction parallèle à la direction longitudinale du tube d'amenée de gaz d'échappement (3).
